# EUROPÄISCHE PATENTANMELDUNG

(11) **EP 2 014 413 A1**
(43) Veröffentlichungstag der Anmeldung: **14.01.2009**
(21) Anmeldenummer: 07013719.5
(22) Anmeldetag: 12.07.2007
(51) Int. Cl.: B24B 19/14, B24B 49/16

(54) **Anordnung, Verfahren und Vorrichtung zur Instandhaltung von Gasturbinenschaufeln**

(71) Anmelder: Lufthansa Technik AG, 22335 Hamburg (DE)
(72) Erfinder: Reinmöller, Ulf, 22459 Hamburg (DE); Panten, Matthias, 24568 Kaltenkirchen (DE); Kerschbaumer, Ernst, 24568 Oersdorf (DE)
(74) Vertreter: Keussen, Christof

(57) **Zusammenfassung**

Um den Wirkungsgrad von Gasturbinen mit gebrauchten Turbinen- und/oder Kompressorschaufeln zu erhöhen, sollen diese durch spannende Bearbeitung eine optimierte Kontur erhalten. Da die Schaufeln individuelle Verformungen aufweisen, die einen rein geometriebasierte Bewegungsablauf verbieten, wird bei einer automatisierten Bearbeitung der Anpressdruck der Schaufeln an eine Schleifscheibe berücksichtigt. Die Erfindung betrifft eine Anordnung und ein Verfahren zur Durchführung dieser Instandhaltungsmaßnahme, sowie eine Vorrichtung, die sich für den Einsatz in der erfindungsgemäßen Anordnung besonders eignet.

## Beschreibung

Die Erfindung betrifft eine Anordnung, ein Verfahren und eine Vorrichtung, mit deren Hilfe die Konturen der Eintrittskanten von gebrauchten Gasturbinenschaufeln bearbeitet werden können.

Bei Gasturbinen kommen Schaufeln sowohl in der Kompressorals auch in der Turbinenstufe zum Einsatz. Diese Schaufeln weisen in der Regel ein Flügelprofil auf. Um einen möglichst hohen Wirkungsgrad zu erreichen ist dieses Profil für die Schaufeln jeder einzelnen Turbinenstufe optimiert. Teil dieser Optimierung ist auch die Formgebung der Eintrittskante.

Im Bereich der Gasturbinen genießt der Hochdruckkompressorbereich einen sehr hohen Stellenwert, da er einen großen Einfluss auf die Leistung des Gesamtsystems hat. Die dort eingesetzten Kompressorschaufeln deformieren sich allerdings im Laufe der Zeit durch aerodynamische Belastung und verschiedene andere Einflüsse. Im Fall von Flugzeugtriebwerken, welche eine Sonderform der Gasturbine darstellen, können diese sonstige Einflüsse beispielsweise aus angesaugtem Staub, Hagel oder sonstigen festen Projektilen bestehen.

Durch Abweichungen von der Idealform der Schaufeln kommt es zu Effizienzverluste des Triebwerks. Andererseits sind die einzelnen Schaufeln in ihrer Herstellung zu kostenintensiv, so dass ein regelmäßiger Austausch beschädigter Schaufeln durch Neuteile nicht sinnvoll erscheint. Es besteht also Bedarf, beschädigte Schaufeln kostengünstig so instand zu setzen, dass sich der Wirkungsgrad des Triebwerks wieder erhöht.

Durch öffentliche Vorbenutzung ist ein Verfahren bekannt, in dem die Eintrittkanten beschädigter Schaufeln manuell nachgeschliffen werden. Das Ziel dieser Bearbeitung ist das Ausgleichen von Unebenheiten. Dafür muss jede Schaufel einzeln von einem Mechaniker an eine Schleifmaschine herangeführt werden. Bei diesem Verfahren gelingt es in der Regel allerdings nur, die Eintrittskante zu glätten, nicht jedoch ihr eine optimierte Form zu geben. Denn obwohl das Profil der nachbearbeiteten Schaufel nicht mehr dem eines Neuteils entspricht, gibt es mehr oder minder günstige Querschnitte im Bereich der Eintrittkante von Triebwerksschaufeln, welche direkte Auswirkungen auf die Effizienz des gesamten Triebwerkes haben.

Im Stand der Technik ist weiterhin bekannt, einzelne Arbeitsschritte bei der mechanischen Bearbeitung von Bauteilen durch Roboter durchführen zu lassen. Roboter bieten den Vorteil, dass die Abweichungen von dem gewünschten Ergebnis in der Regel geringer ausfallen als bei manueller Bearbeitung. Da Roboter stets einem vorher festgelegten Bewegungsablauf folgen, eignen sie sich allerdings nur für die Bearbeitung von Bauteilen, die von vorneherein in einem relativ engen Toleranzspektrum liegen. Im Falle von Gasturbinenschaufeln ist das in der Regel nur bei Neuteilen gegeben.

Der Erfindung liegt die Aufgabe zu Grunde, die Instandsetzung von gebrauchten Triebwerksschaufeln dahingehend zu verbessern, dass durch eine automatisierte Bearbeitung der Schaufeln wiederholbar eine optimierte Kontur erreicht wird.

Die erfindungsgemäße Lösung liegt in der Anordnung, dem Verfahren sowie der Vorrichtung gemäß den unabhängigen Ansprüchen. Vorteilhafte Weiterbildungen ergeben sich aus den Unteransprüchen.

Die erfindungsgemäße Anordnung zur Wiederherstellung einer optimierten Kontur der Eintrittskanten von Gasturbinenschaufeln umfasst einen computergesteuerten Roboter zum Führen einer einzelnen Gasturbinenschaufel, mindestens eine Schleifmaschine im Bewegungsradius des Roboters für die spanende Bearbeitung dieser Gasturbinenschaufel, sowie eine Rechnereinheit zur Steuerung des·Roboters, die einen Datenspeicher umfasst, auf dem der Bewegungsablauf des Roboters abgelegt ist, wobei die mindestens eine Schleifmaschine einen Sensor für den Anpressdruck des Werkstücks aufweist und dessen Messsignalausgang mit der Rechnereinheit verbunden ist.

Das erfindungsgemäße Verfahren zur Wiederherstellung einer optimierten Kontur der Eintrittskanten von Gasturbinenschaufeln wird eine Gasturbinenschaufel mit Hilfe eines computergesteuerten Roboters an einer oder mehrerer Schleifmaschine(n) so vorbeigeführt wird, dass aufgrund des Nachfahrens eines in einem Datenspeicher abgespeichertes Bewegungsablaufs die gewünschte Kontur erreicht wird, wobei der Anpressdruck der Kompressorschaufel an die Schleifscheibe(n) gemessen und so in dem Bewegungsablauf des Roboters berücksichtigt wird, dass die gewünschte Kontur unabhängig von der Ausgangskontur und Abnutzung der Schleifscheiben erreicht wird.

Die erfindungsgemäße Vorrichtung ist eine für die erfindungsgemäße Anordnung und für die Durchführung des erfindungsgemäßen Verfahrens geeignete Schleifmaschine zum spanenden Bearbeiten eines am Arbeitspunkt mit Anpresskraft angelegten Werkstücks umfassend eine rotierende, durch einen Motor angetriebene Schleifscheibe, wobei die Schleifscheibe in Anpressrichtung auf einer Bahn verschiebbar gelagert ist und eine Vorrichtung zur Erzeugung eines definierten Anpressdrucks vorgesehen ist.

Zunächst seien einige im Rahmen der Erfindung verwendete Begriffe erläutert:
Der Begriff Gasturbinenschaufel ist generisch und umfasst sowohl die Schaufeln der Kompressorstufe als auch die der Turbinenstufe.

Mit Schaufeltyp wird die unterschiedliche Ausgestaltung von Schaufeln der einzelnen Kompressor- und Turbinenstufen einer Gasturbine erfasst. Auch Schaufeln gleicher Stufen unterschiedlicher Triebwerke sind in der Regel von einem unterschiedlichen Schaufeltyp.

Der Aktionsradius eines Roboters bezeichnet den Bereich, in dem der Roboter agieren kann. Bei einem stationären Roboter wird dieser Bereich durch die maximale Reichweite des Auslegers bestimmt.

Der Roboter ist in der Lage einzelne Gasturbinenschaufeln an Mess- und Bearbeitungsmaschinen vorbeizuführen. Der Roboter ist dazu vorzugsweise computergesteuert und weist die für die Bearbeitung notwendigen Freiheitsgrade auf. Dies kann beispielsweise durch die Verwendung eines handelsüblichen 6-Achsen-Roboters gewährleistet werden. Der Bewegungsablauf des Roboters ist in einem Datenspeicher abgespeichert. Vorzugsweise ist vorzusehen, dass in diesem Datenspeicher eine Vielzahl von Bewegungsabläufen abgespeichert ist, die je nach zu bearbeitendem Schaufeltyp abgerufen werden können. Weiterhin bevorzugt ist es, wenn der Roboter mit einem auf den zu bearbeitenden Schaufeltyp abgestimmten Greifarm ausgestattet ist, der es ermöglicht, Gasturbinenschaufeln selbstständig aufzunehmen und abzulegen. Bei der Bearbeitung verschiedener Schaufeltypen mit der gleichen Anordnung kann es vorteilhaft sein, wenn der Roboter selbständig den Greifarm auswechseln kann, um ein optimales Greifen jedes Schaufeltyps sicherzustellen. Dazu ist bevorzugt ein Magazin vorhanden, in dem die Greifarme für den Roboter zugänglich abgelegt sind.

Im Aktionsradius des Roboters ist mindestens eine Schleifscheibe angeordnet. Diese zeichnet sich dadurch aus, dass sie den Anpressdruck eines Werkstückes an die Schleifscheibe misst. Dieser Messwert kann an den Computer, der den Roboter steuert, übermittelt und im Bewegungsablauf des Roboters berücksichtigt werden. Dementsprechend ist das Ergebnis des Bearbeitungsvorganges nicht mehr ausschließlich von der Geometrie der Gasturbinenschaufel im Ausgangszustand abhängig. Abweichungen in der Geometrie können vielmehr durch Vergleich des gemessenen Anpressdruckes mit einem I-dealwert berücksichtigt werden.

Die im erfindungsgemäßen Verfahren hergestellte oder wiederhergestellte optimierte Kontur der Turbinenschaufel (auch Designkontur genannt) wird empirisch und/oder mathematisch entwickelt bzw. berechnet. Erfindungsgemäß ist es bevorzugt, wenn ein typischer Verschleißzustand eines Turbinenschaufeltyps ermittelt wird, vorzugsweise durch Bilden des statistischen Mittels des Ist-Zustands aus einer Vielzahl, bevorzugt etwa 100 bis 500 Schaufeln eines bestimmten Typs. Ferner werden bevorzugt Toleranzbereiche um diesen statistischen mittleren Verschleißzustand herum definiert, innerhalb deren eine Turbinenschaufel erfindungsgemäß wieder aufgearbeitet werden kann. Wie weiter unten erläutert, können außerhalb dieses Teleranzbereiches befindliche Schaufeln vor dem Bearbeitungsvorgang durch eine geeignete Messung erfasst und aussortiert werden.

Das Parametrisieren der Schleifmaschine erfolgt in einer Art und Weise, dass der Bearbeitungsvorgang eine Schaufel aus dem vorher ermittelten statistischen mittleren Verschleißzustand in die ebenfalls vorher ermittelte oder berechnete Designkontur überführt. Die erfindungsgemäß vorgesehene Messung des Anpressdrucks der zu bearbeitenden Schaufel an das Werkzeug (bevorzugt der Schleifscheibe) der Schleifmaschine erlaubt es, dass, bevorzugt durch Berücksichtigung im Bewegungsablauf des Roboters und/oder eine Verschiebbare Lagerung der Schleifscheibe, jede einzelne Turbinenschaufel mit einer individuellen Verschleißkontur, die zwar von dem mittleren statistischen Verschleißzustand abweicht aber noch innerhalb des Toleranzbereichs liegt, dennoch vollständig oder weitgehend in die vorher ermittelte Designkontur überführt wird.

Die Erfindung ermöglicht somit ein automatisiertes einfaches und schnelles Aufbereiten von Gasturbinenschaufeln, bei denen vor dem eigentlichen Schleifvorgang jede einzelne Schaufel nur daraufhin überprüft werden muss, ob sie in den vorgegebenen Toleranzbereich fällt. Der genaue Ist-Zustand jeder einzelnen Schaufel innerhalb des Toleranzbereichs muss erfindungsgemäß weder festgestellt noch bei der Vorprogrammierung bzw. Parametrisierung des Schleifprozesses berücksichtigt werden.

Vorzugsweise befinden sich im Aktionsradius des Roboters mindestens zwei Schleifscheiben, die vorzugsweise mit Schleifscheiben anderer Konsistenz und/oder Größe bestückt sind, um so ein verbessertes Endresultat des gesamten Bearbeitungsschrittes zu erreichen. Weiterhin ist bevorzugt, dass der Roboter die Schleifscheiben auf den Schleifmaschinen selbstständig auswechseln kann. Dazu ist ein entsprechendes Roboterwerkzeug vorzusehen, dass vorzugsweise ähnlich wie die Greifarme gewechselt werden kann. Bevorzugt ist es ein Magazin, welches vom Roboter erreicht werden kann, mit den für die Bearbeitung verschiedener Schaufeltypen notwendigen Schleifscheiben vorzusehen.

Auch wenn die erfindungsgemäße Anordnung Abweichungen von einer idealisierten Ausgangsform der gebrauchten Gasturbinenschaufeln erlaubt, so sind einige Schaufeln zu einem solchen Maß degradiert, dass eine Instandsetzung durch ausschließlich spanende Bearbeitung nicht mehr in Frage kommt. Um diese vor Beginn des eigentlichen Bearbeitungsvorganges auszusortieren, werden die einzelnen Gasturbinenschaufeln vorzugsweise an einem Messgerät vorbeigeführt, welches mindestens eine charakteristische Größe des Bauteils misst. Bei dieser charakteristischen Größe kann es sich beispielsweise um die Sehnenlänge des Flügelprofils handeln. Unterschreitet die gemessene Größe einer Gasturbinenschaufel einen festgelegten Grenzwert, so wird diese Schaufel vorzugsweise vor Beginn der spannenden Bearbeitung aussortiert.

Um die Abweichungen bei der Bearbeitung der Gasturbinenschaufeln möglichst gering zu halten, sind die Achsen des Roboters vorzugsweise so angeordnet, dass die Totzeitglieder bei Bewegungen senkrecht zur Schleifscheibe möglichst klein sind. Dadurch wird erreicht, dass die Entfernung vom Mittelpunkt der Schleifscheibe zum Werkstück exakt eingestellt werden kann.

Um einen kontinuierlichen Betrieb der Anordnung zu gewährleisten, kann eine Vorrichtung vorgesehen sein, die noch zu bearbeitende Gasturbinenschaufeln in den Aktionsradius des Roboters hineinbringt und bereits bearbeitete aus diesem heraustransportiert. Eine Mehrzahl von Gasturbinenschaufeln kann dazu bevorzugt in Boxen zusammengefasst werden, was die Logistik erleichtert. Durch eine solche Vorrichtung ist ein vollautomatischer 24/7-Betrieb möglich.

Das beanspruchte Verfahren umfasst grundsätzlich die für den Betrieb der beschriebenen Anordnung bevorzugte Handlungsabfolge.

Darüber hinaus können auch während des Schleifvorgangs noch Beschädigungen an der Gasturbinenschaufel festgestellt werden, die eine Instandsetzung durch die erfindungsgemäße Anordnung verbieten. Überschreitet der gemessene Anpressdruck festgelegte und im Datenspeicher abgelegte Toleranzen, so kann daraus geschlossen werden, dass das Werkstück zu stark von der idealen Ausgangsgeometrie abweicht. Die in der Bearbeitung befindliche Gasturbinenschaufel kann daraufhin aussortiert werden.

Die beanspruchte Vorrichtung besteht aus einer für die erfindungsgemäße Anordnung bzw. für die Durchführung des erfindungsgemäßen Verfahrens besonders geeigneten Schleifmaschine.

Die Schleifmaschine umfasst einen Motor, der eine austauschbare Schleifscheibe antreibt, wodurch Material von einem am Arbeitspunkt mit Anpressdruck anliegendem Werkstück abgetragen wird. Die Schleifscheibe - vorzugsweise zusammen mit ihrem Antriebsmotor - sind verschiebbar gelagert. Dabei ist den Bahn der Verschiebung so gestaltet, dass sich die Scheibe vom Arbeitspunkt wegbewegen kann. Die Schleifscheibe ist also so gelagert, dass sich der Anpressdruck durch Verschiebung derselben genau einstellen lässt. Um dies zu erreichen, ist eine Antriebsvorrichtung vorgesehen, welche die Schleifscheibe entlang der beschriebenen Bahn bewegen kann und somit den Anpressdruck einstellbar macht.

Vorzugsweise ist die Bahn, auf welcher die Schleifscheibe bewegt, ausschließlich senkrecht zu deren Rotationsachse angeordnet. Dadurch werden Querverschiebungen der Schleifscheibe gegenüber dem Werkstück unterdrückt. Die Form der Bahn ist zunächst beliebig, bevorzugt sind allerdings geradlinige oder kreisförmige Formen.

Als eine besonders günstige Möglichkeit, eine Kreisbahn der Schleifscheibe zu erreichen, hat sich eine Pendelaufhängung von Antriebsmotor und Schleifscheibe herausgestellt. Dabei sind die beiden Komponenten an einer einzigen Achse oberhalb ihrer eigenen Position aufgehängt, um welche sie frei schwingen können.

Um den Anpressdruck erfassen zu können, ist ein entsprechender Sensor vorzusehen. Dieser ist so anzubringen, dass er unabhängig von der Position der Schleifscheibe auf der Verschiebungsbahn gleichbleibend exakte Werte liefert.

Zur Erzeugung des eigentlichen Anpressdruckes kann vorgesehen sein, die Gravitation auszunutzen. Im Falle der Pendelaufhängung wird dies erreicht, wenn das Pendel während der Bearbeitung entsprechend ausgelenkt ist. Für das nötige Gewicht zur Erzeugung eines ausreichend großen Anpressdruckes können neben dem Eigengewicht des Antriebsmotors und/oder der Schleifscheibe Zusatzgewichte vorgesehen sein. Bei anderen Bahnformen kann ein Zusatzgewicht über entsprechende Umlenkung die nötige Kraft zur Erzeugung des Anpressdruckes aufbringen. Bevorzugt ist es aber, wenn der Anpressdruck durch eine - bspw. elektrische - Antriebseinheit erzeugt wird. Dadurch wird der erzeugte Druck gleichzeitig regelbar.

Um das Werkstück bei Ausfall der für die Anpressdruckerzeugung vorgesehenen Antriebseinheit vor Beschädigungen zu schützen, kann vorgesehen sein, dass sich die Schleifscheibe in einem solchen Fall z.B. aufgrund von Gravitation vom Werkstück wegbewegt.

Die beschriebene Pendelaufhängung der Schleifscheibe ist beispielsweise in der Lage, die Vorderkante einer Turbinenschaufel auch dann in die gewünschte Designkontur zu überführen, wenn diese Vorderkante Abweichungen von etwa 2 bis 3 mm relativ zum statistischen mittleren Verschleißzustand aufweist oder beispielsweise durch Ungenauigkeiten beim Ergreifen der Schaufel durch den Roboter Winkelabweichungen von bis zum 4° hinsichtlich der Winkelstellung vorliegen, mit der diese Vorderkante relativ zur statistisch ermittelten mittleren Winkelstellung an das Schleifwerkzeug herangeführt wird.

Die Erfindung wird nachfolgend unter Bezugnahme auf die beigefügte Zeichnungen erläutert, in der je ein vorteilhaftes Ausführungsbeispiel der erfindungsgemäßen Anordnung sowie Vorrichtung dargestellt ist. Es zeigen:
- Fig. 1: eine funktionelle Darstellung der beispielhaften Anordnung; und
- Fig. 2: ein Ausführungsbeispiel einer erfindungsgemäßen Schleifmaschine.

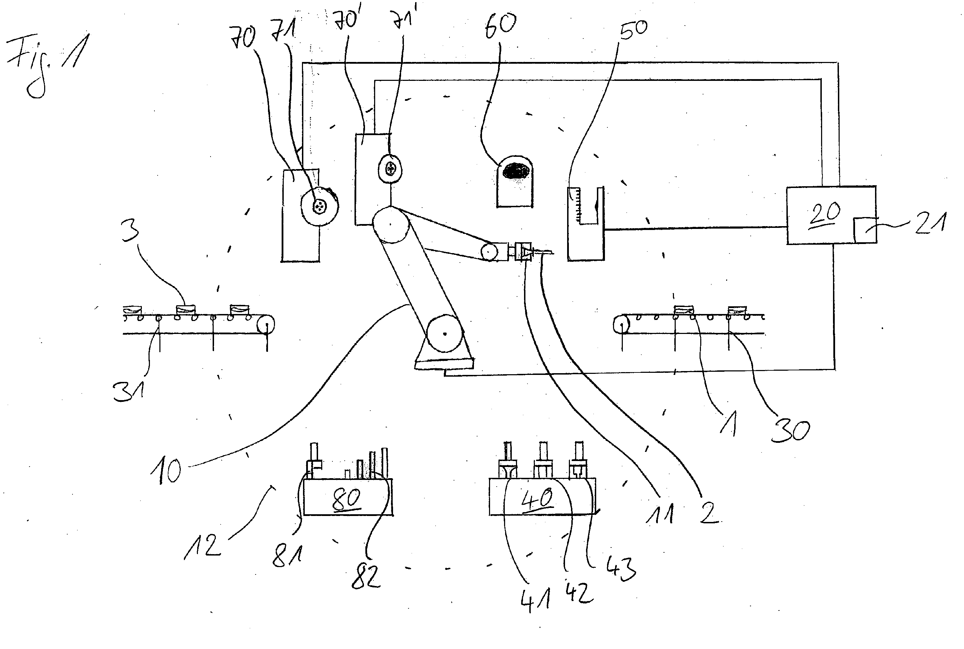

Fig. 1 zeigt einen 6-Achsen-Roboter 10, an dessen beweglichen Ende ein Greifarm 11 angebracht ist. Die maximale Reichweite des Roboters 10 bildet den Aktionsradius 12. Der Roboter 10 wird von der Rechnereinheit 20 mit Datenspeicher 21 gesteuert.

Über das Transportband 30 werden unbearbeitete, gebrauchte Gasturbinenschaufeln 1 in den Aktionsradius 12 des Roboters 10 transportiert. Mit seinem Greifarm 11 kann der Roboter 10 jeweils eine dieser Gasturbinenschaufeln 2 greifen.

Damit der Roboter 10 die Gasturbinenschaufel 2 sicher führen kann, steht dem Roboter 10 ein Magazin 40 mit verschiedenen Greifarmen 41, 42, 43 im Aktionsradius 12 zur Verfügung, aus dem sich der Roboter 10 selbst bedienen kann, so dass sich am Roboter 10 immer ein für die zu bearbeitende Schaufel 2 passender Greifarm 11 befindet.

In dem dargestellten Ausführungsbeispiel ist die Reihenfolge der Schaufeltypen der unbearbeiteten Gasturbinenschaufeln 1 in dem Datenspeicher 21 der Rechnereinheit 20 abgespeichert. Hierzu ist es nötig, dass die Reihenfolge in den Datenspeicher 21 eingegeben wird. Dies kann manuell geschehen. Es ist aber auch möglich, dass der Schaufeltyp der Gasturbinenschaufeln 1 durch Sensoren festgestellt und der Rechnereinheit 20 übermittelt wird. Bei dieser Alternative entfällt die manuelle Eingabe vollständig. Ebenso ist es möglich, mehrere Gasturbinenschaufeln 1 in einer Box zusammenzufassen, wobei sich in einer Box immer nur Schaufeln gleichen Typs oder Schaufeln in einem festen Anordnungsmuster befinden. Dadurch lässt sich der Eingabeaufwand deutlich reduzieren, da Informationen nur noch pro Box und nicht mehr pro Schaufel eingeben werden müssen.

Nachdem der Roboter 10 eine zu bearbeitende Schaufel 2 sicher gegriffen hat, führt er sich an einem im Aktionsradius 12 befindlichen Messgerät 50 vorbei. Mit diesem Messgerät 50 wird mindestens eine charakteristische Größe der Schaufel 2 gemessen. Bei dieser charakteristischen Größe kann es sich beispielweise um die Sehnenlänge des Flügelprofils der Schaufel 2 handeln. Der Messwert wird dann in der Rechnereinheit 20 mit einem Mindest- und/oder Maximal-Sollwert verglichen. Sollte eine zu große Abweichung festgestellt werden, wird die Schaufel 2 vor Beginn des Bearbeitungsvorganges aussortiert und in den Behälter 60 abgeworfen. Zum Beispiel durch manuelles Aufschweißen von Material können die im Behälter 60 landenden Schaufeln aber teilweise soweit wiederhergestellt werden, dass sie nach erneutem Durchlaufen der Anordnung wieder in einer Gasturbine eingesetzt werden können.

Befindet sich die Schaufel 2 im Toleranzbereich der Messung am Messgerät 50, wird sie an eine Schleifmaschine 70 oder 70' herangeführt. Der Einsatz von zwei Schleifmaschinen 70, 70' bietet den Vorteil, dass - ohne einen zeitaufwändigen Schleifscheibenwechseln - für die Bearbeitung der Schaufel 2 immer zwei Schleifscheiben 71, 71' mit unterschiedlicher Körnung und/oder Durchmesser zur Verfügung stehen. Dadurch kann das Bearbeitungsergebnis weiter verbessert werden. Wahlweise können aber auch nur eine oder mehr als die zwei dargestellten Schleifmaschinen 70, 70' zum Einsatz kommen.

Abhängig zum Schaufeltyp der zu bearbeiteten Schaufel 2 können die Schleifscheiben 71, 71' durch den Roboter 10 gewechselt werden. Dafür stehen in einem Magazin 80 ein entsprechendes Roboterwerkzeug 81, sowie eine Vielzahl an Schleifscheiben 82 zur Verfügung.

Die Schleifmaschinen 70, 70' zeichnen sich durch einen Sensor für den Anpressdruck der Schaufel 2 auf die Schleifscheiben 71, 71' aus. Die Messsignale dieser Sensoren werden an die Rechnereinheit 20 übermittelt und können so im Bewegungsablauf des Roboters 10 berücksichtigt werden. Dadurch ist es möglich, auch Schaufeln 2 die von einer Idealform abweichen noch zu bearbeiten. Das Ergebnis des Bearbeitungsvorganges ist also nicht mehr nur von der Geometrie der Gasturbinenschaufel 2 im Ausgangszustand abhängig.

Sollte sich während der Bearbeitung an den Schleifmaschinen 70, 70' herausstellen, dass die Schaufel 2 zu stark von einer Idealform abweicht, so landet sie im Behälter 60.

Nach erfolgter und erfolgreicher Bearbeitung der Schaufel 2 wird diese zu anderen, bereits bearbeiteten Schaufeln 3 auf ein Transportband 31 gelegt, welches die Schaufeln 3 aus dem Aktionsradius 12 des Roboters 10 herausbringt. Dabei muss das Band für den Abtransport 31 nicht von dem für die Anlieferung 30 getrennt ausgeführt sein. Es ist ebenso möglich ein gemeinsames Transportband zu verwenden. Beim Einsatz von Boxen kann weiterhin vorgesehen sein, dass bearbeitete Schaufeln 3 wieder in die Box an ihren ursprünglichen Platz einsortiert werden.

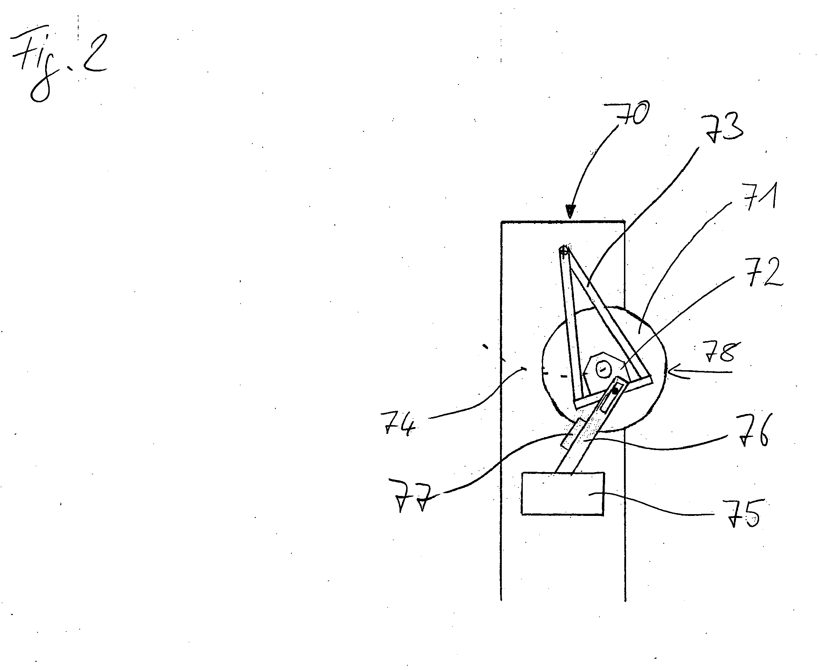

In Fig. 2 ist ein Ausführungsbeispiel einer erfindungsgemä-βen Schleifmaschine dargestellt. Die Schleifmaschine 70 umfasst eine Schleifscheibe 71, die durch einen Motor 72 angetrieben wird. Motor 72 und Schleifscheibe 71 sind auf einem Pendel 73 angeordnet. Das Pendel 73 ist oberhalb des Motors 72 drehbar gelagert. Motor 72 und Schleifscheibe 71 können sich also auf einer Kreisbahn 74 bewegen.

Um die Position der Schleifscheibe 71 auf der Kreisbahn 74 genau einzustellen, ist eine Antriebseinheit 75 vorgesehen, die über einen Ausleger 76 mit dem Pendel 73 verbunden ist. An diesem Ausleger 76 befindet sich eine Spannungsmessdose 77, mit deren Hilfe es möglich ist, den durch den Pfeil 78 angedeuteten Anpressdruck eines Werkstückes (nicht dargestellt) auf die Schleifscheibe 71 zu ermitteln. Durch den Anpressdruck 78 entsteht nämlich eine Biegebeanspruchung im Ausleger 76. Es sind aber natürlich auch beliebige andere Messverfahren möglich. Ebenso ist es denkbar, den Antrieb des Pendels anders zu gestalten.

In der Darstellung befindet sich das Pendel 73 in Schleifposition, d.h. in dieser Position wird das Werkstück an die Schleifscheibe 71 herangeführt und die Antriebseinheit 75 erzeugt genügend Kraft, um das Pendel 73 trotz Anpressdruck 78 in dieser Position zu halten. Das Pendel befindet sich während des Schleifvorgangs also nicht in Null-Lage.

In dem Fall, dass die Antriebseinheit 75 ausfällt oder der Anpressdruck aufgrund eines anderen Defektes nicht aufrecht gehalten werden kann, bewegt sich die Schleifscheibe 71 automatisch vom Werkstück weg. Dies geschieht aufgrund der Gravitation, die das Pendel 73 zusammen mit Motor 72 und Schleifscheibe 71 in die Null-Lage zurückführt. Eine Beschädigung des Werkstückes wird so vermieden.

## Patentansprüche

1. Anordnung zur Wiederherstellung einer optimierten Kontur der Eintrittskanten von Gasturbinenschaufeln, bestehend aus einem computergesteuerten Roboter (10) zum Führen einer einzelnen Kompressorschaufel (2), mindestens einer Schleifmaschine (70, 70') im Aktionsradius (12) des Roboters (10) für die spanende Bearbeitung dieser Gasturbinenschaufel (2), sowie eine Rechnereinheit (20) zur Steuerung des Roboters (10), die einen Datenspeicher umfasst (21), auf dem der Bewegungsäblauf des Roboters (10) abgelegt ist, **gekennzeichnet dadurch, dass** die mindestens eine Schleifmaschine (70, 71) einen Sensor für den Anpressdruck des Werkstücks aufweist und dessen Messsignalausgang mit der Rechnereinheit (20) verbunden ist.

2. Anordnung nach Anspruch 1, **dadurch gekennzeichnet, dass** am Roboter (10) ein Greifarm (11) vorgesehen ist, mit dem das selbstständige Greifen von Gasturbinenschaufeln (2) an ihren Füßen möglich ist.

3. Anordnung nach Anspruch 2, **dadurch gekennzeichnet, dass** der Greifarm (11) austauschbar gestaltet ist und ein Magazin (40) für verschiedene Greifarme (41, 42, 43) vorgesehen ist, aus dem sich der Roboter (10) selbstständig bedienen kann.

4. Anordnung nach einem der Ansprüche 1 bis 3, **dadurch gekennzeichnet, dass** ein Roboterwerkzeug (81) vorgesehen ist, durch welches ein automatisches Austauschen der Schleifscheibe (71, 71') an der Schleifmaschine (70, 70') möglich ist.

5. Anordnung nach Anspruch 4, **dadurch gekennzeichnet, dass** ein Magazin (80) für verschiedene Schleifscheiben (82) vorgesehen ist, aus dem sich der Roboter (10) selbstständig bedienen kann.

6. Anordnung nach einem der Ansprüche 1 bis 4, **dadurch gekennzeichnet, dass** mindestens zwei Schleifmaschinen (70, 70') im Aktionsradius (12) des Roboters (10) angeordnet sind.

7. Anordnung nach einem der Ansprüche 1 bis 6, **dadurch gekennzeichnet, dass** die Bewegungsachsen des Roboters (10) so ausgerichtet sind, dass die Totzeitglieder bei Bewegungen senkrecht zur Schleifscheibe (71, 71') möglichst gering sind.

8. Anordnung nach einem der Ansprüche 1 bis 7, **dadurch gekennzeichnet, dass** ein Sensor (50) zur Messung der Länge einer Gasturbinenschaufel (2) vorgesehen ist.

9. Anordnung nach einem der Ansprüche 1 bis 8, **dadurch gekennzeichnet, dass** eine Versorgungseinrichtung (30, 31) zum Transport zu bearbeitender und bereits bearbeiteter Teile in den Aktionsradius (12) des Roboters (10) hinein und aus diesem heraus vorgesehen ist.

10. Anordnung nach einem der Ansprüche 1 bis 9, **dadurch gekennzeichnet, dass** mehrere zu bearbeitende Gasturbinenschaufeln in einer Box angeordnet sind, aus dem sich der Roboter (10) selbstständig bedienen kann.

11. Verfahren zur Wiederherstellung einer optimierten Kontur der Eintrittskanten von Gasturbinenschaufeln, bei der eine Gasturbinenschaufel (2) mit Hilfe eines computergesteuerten Roboters (10) an einer oder mehrerer Schleifmaschine(n) (71, 71') so vorbeigeführt wird, dass aufgrund des Nachfahrens eines in einem Datenspeicher (21) abgespeichertes Bewegungsablaufs die gewünschte Kontur erreicht wird, **dadurch gekennzeichnet, dass** der Anpressdruck der Gasturbinenschaufel an die Schleifscheibe(n) (71, 71') gemessen und so in dem Bewegungsablauf des Roboters (10) berücksichtigt wird, dass die gewünschte Kontur unabhängig von der Ausgangskontur und Abnutzung der Schleifscheiben erreicht wird.

12. Verfahren nach Anspruch 11, **dadurch gekennzeichnet, dass** der Roboter (10) je nach zu bearbeitendem Schaufeltyp einen geeigneten Greifarm (11) ausgestattet wird.

13. Verfahren nach Anspruch 12, **dadurch gekennzeichnet, dass** der Roboter (10) die Greifarme (11, 41, 42, 43) selbstständig auswechseln kann.

14. Verfahren nach Anspruch 11, 12 oder 13, **gekennzeichnet dadurch, dass** die mindestens eine Schleifmaschine (70, 70') je nach zu bearbeitendem Schaufeltyp mit einer geeigneten Schleifscheibe (71, 71') bestückt wird.

15. Verfahren nach Anspruch 14, **dadurch gekennzeichnet, dass** der Roboter (10) die Schleifscheiben (71, 71') der mindestens einen Schleifmaschine (70, 70') selbstständig auswechseln kann.

16. Verfahren nach einem der Ansprüche 11 bis 15 **dadurch gekennzeichnet, dass** vor Beginn des Bearbeitungsvorgangs das Vorhandensein und mindestens eine charakteristische Größe der zu bearbeitenden Gasturbinenschaufel (2) überprüft wird.

17. Verfahren nach Anspruch 16, **dadurch gekennzeichnet, dass** Kompressorschaufeln (2), die einen Grenzwert für die gemessene charakteristische Größe nicht einhalten, noch vor der Bearbeitung aussortiert werden.

18. Verfahren nach einem der Ansprüche 11 bis 17 **dadurch gekennzeichnet, dass** Kompressorschaufeln (2), bei denen der während der Bearbeitung gemessene Anpressdruck der Schleifscheibe (71, 71') aufgrund von Formabweichungen der Gasturbinenschaufel außerhalb einer festgelegten Toleranz liegt, automatisch aussortiert werden.

19. Verfahren nach einem der Ansprüche 11 bis 18 **dadurch gekennzeichnet, dass** im Datenspeicher (21) Bewegungsabläufe für eine Vielzahl von unterschiedlichen Schaufeltypen gespeichert sind und bei Bedarf abgerufen werden können.

20. Verfahren nach einem der Ansprüche 11 bis 19 **dadurch gekennzeichnet, dass** die bearbeiteten Kompressorschaufeln (3) automatisch aus dem Aktionsradius (12) des Roboters (10) heraus- und unbearbeitete Gasturbinenschaufel (1) hineingebracht werden.

21. Schleifmaschine zum spanenden Bearbeiten eines am Arbeitspunkt mit Anpresskraft angelegten Werkstücks umfassend eine rotierende, durch einen Motor (72) angetriebene Schleifscheibe (71) **dadurch gekennzeichnet, dass** die Schleifscheibe in Anpressrichtung auf einer Bahn verschiebbar gelagert ist und eine Vorrichtung (75, 76) zur Erzeugung eines definierten Anpressdrucks (78) vorgesehen ist.

22. Schleifmaschine nach Anspruch 21, **dadurch gekennzeichnet, dass** die Bahn (74), auf der die Schleifscheibe (71) verschiebbar ist, in der Ebene der Schleifscheibe liegt und geradlinig ist.

23. Schleifmaschine nach Anspruch 21, **dadurch gekennzeichnet, dass** die Bahn (74), auf der die Schleifscheibe (71) verschiebbar ist, in der Ebene der Schleifscheibe liegt und kreisförmig ist.

24. Schleifmaschine nach Anspruch 22, **dadurch gekennzeichnet, dass** eine Pendelaufhängung (73) für die Schleifscheibe (71), vorzugsweise auch für den Motor (72), vorgesehen ist.

25. Schleifmaschine nach einem der Ansprüche 21 bis 24, **dadurch gekennzeichnet, dass** ein Sensor (77) zur Messung des Anpressdrucks (78) vorgesehen ist.

26. Schleifmaschine nach einem der Ansprüche 21 bis 25, **dadurch gekennzeichnet, dass** ein Gewicht zur Erzeugung des Anpressdrucks (78) durch Ausnutzung der Gravitation vorgesehen ist.

27. Schleifmaschine nach einem der Ansprüche 21 bis 26, **dadurch gekennzeichnet, dass** das eine Antriebseinheit (75) zur Erzeugung oder Regelung des Anpressdrucks (78) vorgesehen ist.

28. Schleifmaschine nach Anspruch 27, **dadurch gekennzeichnet, dass** die Bahn (74), auf der die Schleifscheibe (71) verschiebbar ist, so ausgelegt ist, dass bei Ausfall der Antriebseinheit (75) zur Erzeugung oder Regelung des Anpressdrucks die Schleifscheibe (71) selbstständig, vorzugsweise aufgrund von Gravitation, vom Werkstück wegbewegt wird.
